# DEMANDE DE BREVET EUROPEEN

(11) **EP 0 936 808 A1**
(43) Date de publication de la demande: **18.08.1999**
(21) Numéro de dépôt: 98102410.2
(22) Date de dépôt: 12.02.1998
(51) Int. Cl.: H04N 5/232

(54) **Objet portatif à faible consommation électrique, notamment montre, comprenant un appareil de prise d'images des moyens de transmission des données sans fil**

(71) Demandeur: ASULAB S.A., CH-2501 Bienne (CH)
(72) Inventeur: Dinger, Rudolf, 2024 Saint-Aubin (CH); Grupp, Joachim, 2003 Neuchâtel (CH); Zellweger, Emil, 4514 Lommiswil (CH); Luthier, Roland, 1138 Villars-sous-Yens (CH)
(74) Mandataire: Ravenel, Thierry Gérard Louis

(57) **Abrégé**

L'invention concerne un objet portatif à faible consommation électrique, en particulier une montre-bracelet (1), comprenant un appareil pour la prise d'images qui sont ensuite numérisées par un convertisseur analogique/numérique, puis stockées dans une mémoire , ledit objet portatif comprenant en outre un module électronique de traitement et de transmission sans fil des données numériques correspondant aux images mémorisées dans ledit objet portatif vers une unité de réception électronique distante (36).

## Description

La présente invention concerne un objet portatif à faible consommation électrique, en particulier une pièce d'horlogerie, comprenant un appareil de prise d'images numériques et des moyens de transmission des données sans fil.

Par objet portatif à faible consommation électrique, on entend tout type d'objet portatif dont la consommation électrique est de l'ordre de 5 à 50 mW pour un courant électrique typiquement dans la gamme de 1 à 10 mA.

On connaît déjà des pièces d'horlogerie telles que des montres-bracelets comprenant une boîte à l'intérieur de laquelle est logé un appareil de prise d'images numériques. Le porteur d'une telle montre dispose ainsi en permanence d'un appareil photographique qui lui permet de prendre des clichés par exemple d'un paysage, des membres de sa famille ou encore d'un interlocuteur rencontré au cours d'une réunion de travail. Une fois les photographies prises, celles-ci sont numérisées par un convertisseur analogique/numérique, puis stockées dans un circuit mémoire.

Les photographies mémorisées doivent ensuite être transférées vers une unité électronique de réception et de traitement distante, classiquement un ordinateur personnel ou P.C. Ce transfert s'effectue via un câble électrique dont une extrémité est reliée à la montre, et dont l'autre extrémité est connectée au P.C. Un contact ohmique porté, par exemple, par la carrure de la montre, permet de brancher le câble de transfert d'images sur cette dernière.

Cette solution a pour mérite d'être économique du point de vue de la consommation électrique. La transmission par liaison filaire des données numériques correspondant aux photographies stockées en mémoire ne requiert en effet qu'un très faible courant. De plus, au cours de cette opération de transfert, l'alimentation électrique de la montre peut être assurée par l'ordinateur lui-même qui est généralement raccordé au réseau de distribution électrique.

Par contre, un inconvénient majeur de la transmission par fil réside dans le fait que le contact ohmique nécessaire à la connexion du câble de transfert nuit gravement à l'étanchéité de la montre. Ce contact constitue en effet une ouverture par laquelle l'humidité, l'eau et les poussières peuvent facilement pénétrer dans la boîte de la montre et compromettre le bon fonctionnement de celle-ci.

On connaît d'autre part de nombreuses applications dans lesquelles les photographies enregistrées par un appareil de prise d'images numériques sont transférées, après mise en forme, vers un ordinateur distant via une liaison radiofréquence.

A titre d'exemple, on peut citer le brevet européen No. 0 680 818 au nom de Serel France qui décrit un système de sécurité pour véhicule de transport de personnes tel qu'un taxi. Dans ce système, les signaux analogiques provenant d'un appareil de prise d'images sont convertis en données numériques qui sont ensuite comprimées, puis transmises par un émetteur radio vers la centrale des taxis. Dans cette centrale, les signaux numériques sont captés par un récepteur radio, puis décodés par un décodeur placé à la sortie dudit récepteur. Les images sont finalement affichées sur un moniteur de télévision.

Ce système permet avantageusement de photographier un passager au moment de sa prise en charge par le taxi. Lorsque le trajet s'est déroulé sans incident et que le client a acquitté le prix du transport, sa photographie est effacée.

Un tel système de communication par ondes radiofréquences présente par contre l'inconvénient d'être grand consommateur de courant électrique. Ceci explique pourquoi une telle solution n'a jusqu'à présent jamais été retenue pour un objet portatif par exemple du type montre-bracelet qui dispose d'une réserve d'énergie limitée. Néanmoins, dans le cas du taxi, la batterie du véhicule dispose d'une capacité de stockage d'énergie suffisamment importante pour pouvoir assurer sans difficulté l'alimentation électrique de l'appareil de prise d'images et des moyens de transmission par ondes radiofréquences.

La présente invention a pour but de remédier aux problèmes et inconvénients décrits ci-dessus en proposant un objet portatif, en particulier une montre-bracelet, comprenant un appareil de prise d'images numériques et des moyens de transmission sans fil des données à très faible consommation électrique.

A cet effet, l'invention concerne un objet portatif à faible consommation électrique comprenant un appareil pour la prise d'images qui sont ensuite numérisées par un convertisseur analogique/numérique, puis stockées dans un circuit mémoire, caractérisé en ce qu'il comporte en outre un module électronique de traitement et de transmission sans fil des données numériques correspondant aux images mémorisées dans ledit objet portatif vers une unité de réception électronique distante.

Grâce aux caractéristiques de la présente invention, il est possible de transférer les données numériques correspondant aux images mémorisées dans l'objet portatif via une liaison sans fil vers une unité de réception électronique distante. Il n'est donc plus nécessaire de prévoir un connecteur pour le branchement d'un fil de transfert des données ce qui, en particulier dans le cas d'une pièce d'horlogerie, permet de procurer une boîte parfaitement étanche. L'absence de connecteur permet également de simplifier grandement la construction d'une telle montre en supprimant un nombre important de pièces mécaniques, et donc d'éviter les problèmes d'ajustement inhérents. D'autre part, le câble de transfert constitue un accessoire qui peut être facilement perdu ou oublié.

Le transfert via une liaison sans fil de données mémorisées dans un objet portatif est rendu possible grâce au choix judicieux des composants constituant le module électronique de traitement et de transmission sans fil desdites données. Ce choix est guidé par le souci de procurer un module électronique présentant une consommation électrique aussi faible que possible.

A cet effet, et selon une autre caractéristique avantageuse de l'invention, le module de traitement et de transmission sans fil des données correspondant aux images mémorisées dans l'objet portatif comprend un circuit de traitement des données présentant une architecture spécialisée dans les calculs de compression numérique de ces données.

Selon un mode de réalisation de l'invention, les données mémorisées dans l'objet portatif sont transférées vers l'unité de réception électronique distante via une liaison radiofréquence.

Selon un autre mode de réalisation de l'invention, les données mémorisées dans l'objet portatif sont transférées vers l'unité de réception électronique distante via une liaison infrarouge.

D'autres caractéristiques et avantages de la présente invention apparaîtront plus clairement à la lecture de la description suivante d'un mode de réalisation de l'invention, donné à titre purement illustratif et non limitatif, cette description étant faite en liaison avec les dessins annexés dans lesquels :
- la figure 1 est une vue en perspective de l'avant d'une montre-bracelet selon l'invention comprenant un appareil de prise d'images et des moyens de traitement et de transmission sans fil des données correspondant aux images mémorisées dans ladite montre-bracelet ;
- la figure 2 est une vue en perspective de l'arrière de la montre-bracelet représentée sur la figure 1 ;
- la figure 3 est une représentation schématique globale du système de transmission de données selon l'invention, et
- la figure 4 est une représentation schématique des différents blocs fonctionnels constituant le module électronique de traitement et de transmission sans fil des données correspondant aux images mémorisées dans l'objet portatif.

On notera dès à présent que la présente invention n'est pas limitée à des plages de fréquence particulières pour la transmission sans fil des données correspondant aux images mémorisées dans l'objet portatif.

D'autre part, bien que la description suivante concerne des pièces d'horlogerie, en particulier une montre-bracelet, la présente invention n'est pas limitée à de telles pièces. Elle peut aisément s'appliquer à tout autre objet portatif dont la consommation électrique est de l'ordre de 5 à 50 mW pour un courant typiquement dans la gamme de 1 à 10 mA, et dans lequel est agencé un appareil pour la prise d'images qui sont ensuite numérisées par un convertisseur analogique/numérique, puis stockées dans une mémoire.

Enfin, la présente invention peut s'appliquer de manière identique à la transmission sans fil de tout type de données numériques mémorisées dans un objet portatif.

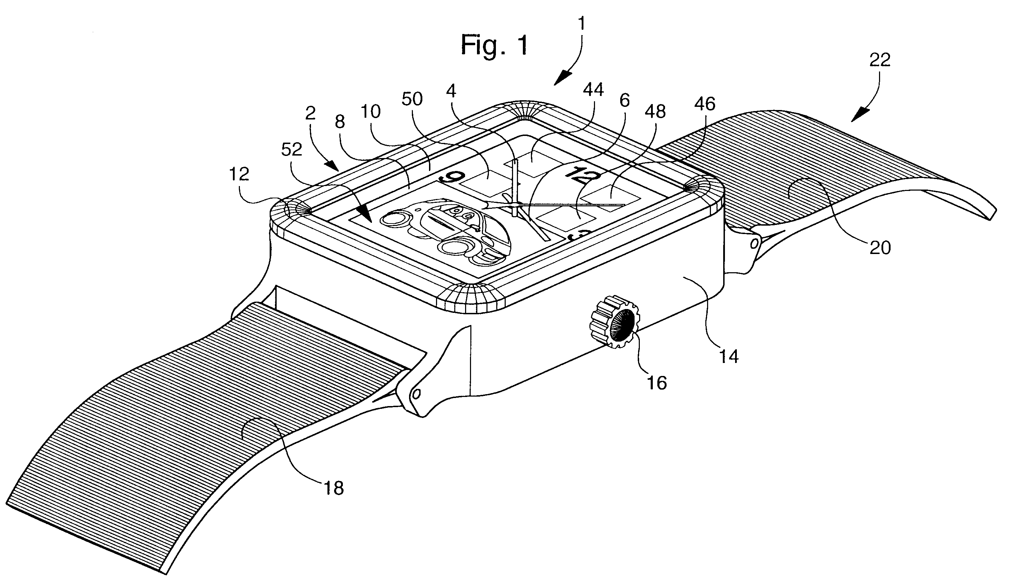

On se reporte tout d'abord à la figure 1 sur laquelle est représentée une pièce d'horlogerie selon l'invention, désignée dans son ensemble par la référence numérique générale 1.

La pièce d'horlogerie 1, par exemple du type montre-bracelet, comporte de façon classique une boîte 2 métallique ou réalisée en un matériau plastique selon des techniques d'injection bien connues.

La pièce d'horlogerie 1 comporte en outre un mouvement horométrique (non représenté) logé à l'intérieur de la boîte 2 et couplé à des indicateurs horaires 4 et 6 formant respectivement une aiguille des heures et une aiguille des minutes et se déplaçant au dessus d'un cadran 8.

La pièce d'horlogerie 1 est rendue étanche au moyen d'une glace 10 et d'une lunette 12. Cette dernière est montée fixe sur la boîte 2 par exemple par collage ou par soudage aux ultrasons.

La boîte 2 comprend une carrure 14 qui porte une couronne de remontoir 16, par exemple pour remonter le mouvement horométrique de la pièce d'horlogerie 1, ou pour régler l'affichage des indicateurs 4 et 6.

Les brins 18 et 20 d'un bracelet 22 sont classiquement fixés sur la carrure 14 de la boîte 2 et permettent l'attache de la pièce d'horlogerie 1 au poignet 24 d'un utilisateur.

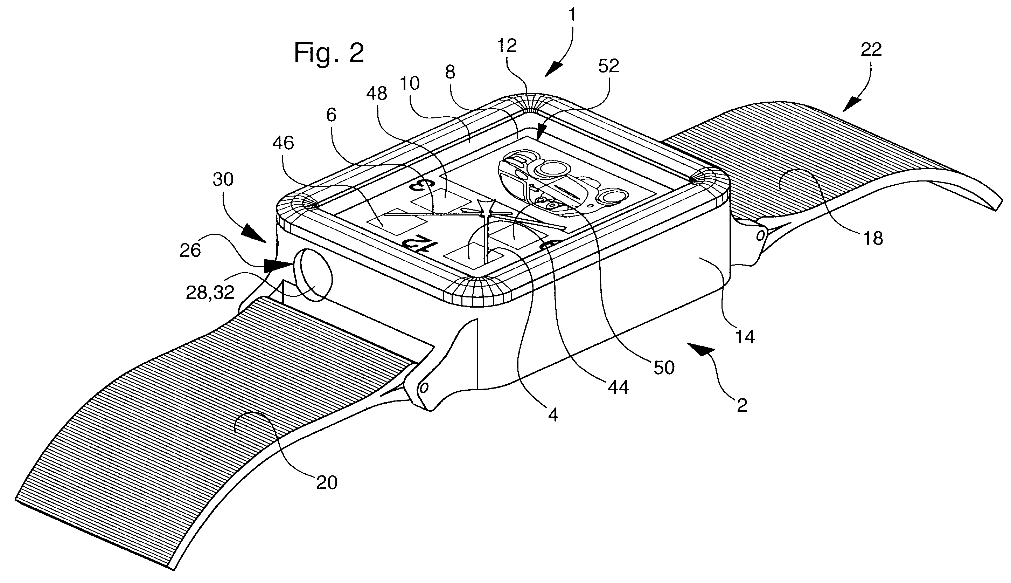

Conformément à l'invention, et comme représenté sur la figure 2, la carrure 14 présente une ouverture 26 destinée à recevoir l'objectif 28 d'un appareil de prise d'images numériques 30. L'ouverture 26 est fermée par une plaque frontale 32 réalisée en un matériau transparent, par exemple en verre organique, et destinée à garantir l'étanchéité parfaite de la boîte 2 de la montre 1.

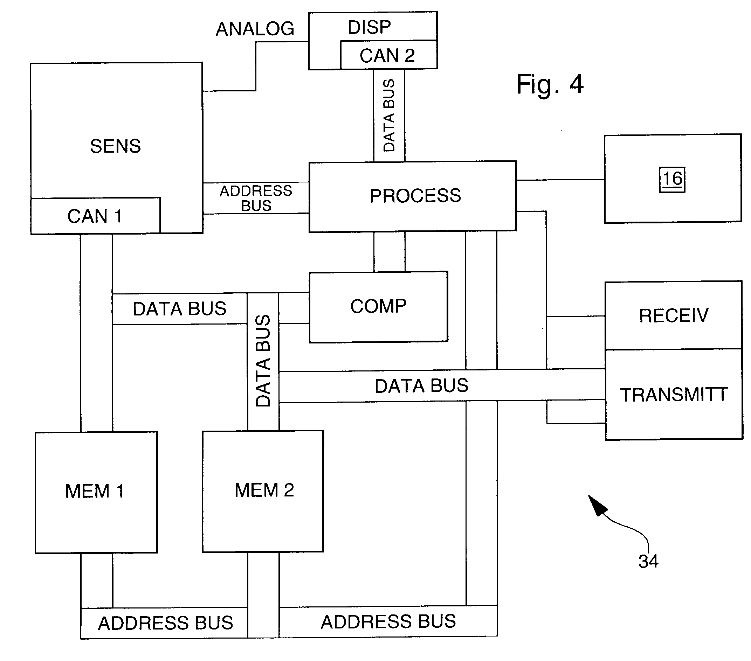

Selon l'une des caractéristiques importantes de l'invention, et comme représenté sur la figure 4, la pièce d'horlogerie 1 comporte un module électronique 34 de traitement et de transmission sans fil des données numériques correspondant aux images stockées dans ladite pièce d'horlogerie 1 vers une unité de réception électronique distante 36.

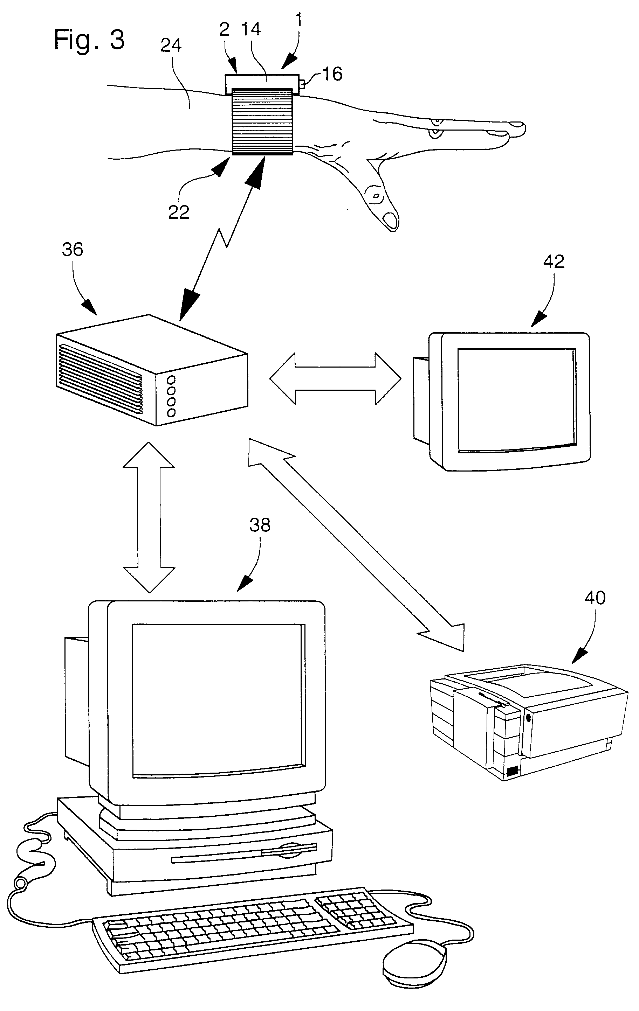

Comme représenté sur la figure 3, l'unité de réception 36 constitue une interface entre la pièce d'horlogerie 1 et un périphérique externe tel que, par exemple, un ordinateur personnel 38, une imprimante 40 ou encore un écran cathodique 42. Cette unité de réception 36 est amovible et transportable. Elle est destinée à permettre une gestion plus simple de l'appareil de prise d'images 30 et, en particulier, des protocoles de transmission des données numériques vers l'un des périphériques 36, 38 ou 40 ci-dessus. Bien entendu, l'unité de réception 36 peut être supprimée. Dans ce cas, la transmission des données correspondant aux images stockées dans la pièce d'horlogerie 1 se fera directement vers le périphérique externe 38, 40 ou 42 sélectionné, moyennant une conversion préalable des données transmises dans un format compatible avec ledit périphérique.

L'appareil de prise d'images numériques 30 sera par exemple commandé par l'utilisateur à l'aide de la couronne de remontoir 16. Comme représenté sur la figure 1, le cadran 8 de la pièce d'horlogerie 1 présente des cellules d'affichage 44, 46, 48 et 50. Ces cellules permettent d'indiquer à l'utilisateur le mode de fonctionnement dans lequel se trouve l'appareil de prise d'images 30, à savoir si celui-ci est ou non sous tension, s'il est prêt pour la prise de la photographie suivante, si l'on se trouve en mode d'affichage successif des prises de vues déjà effectuées, ou encore si le transfert des données numériques correspondant aux images stockées dans la pièce d'horlogerie 1 vers l'unité de réception électronique distante 36 a démarré.

Dans un guichet 52 percé dans le cadran 8 apparaît également une cellule d'affichage électro-optique DISP pour l'affichage de la vue que l'on s'apprête à photographier, ou pour l'affichage successif des photographies déjà prises et stockées momentanément dans la pièce d'horlogerie 1.

On examine maintenant en référence à la figure 4 les différents blocs fonctionnels qui constituent le module électronique 34 de traitement et de transmission sans fil des données selon l'invention.

Selon une première caractéristique intéressante de l'invention, le capteur d'images SENS de l'appareil de prise d'images numériques 30 utilise la technologie CMOS. Ceci signifie que chaque élément photosensible du capteur SENS comprend un certain nombre de transistors CMOS qui réalisent un pré-traitement du signal analogique fournit par ledit capteur SENS. Les circuits intégrés utilisant des transistors CMOS sont avantageusement caractérisés par une très faible consommation électrique, lesdits transistors CMOS ne consommant du courant que pendant les commutations, la consommation au repos étant réduite au courant de fuite de ces transistors. Le capteur SENS présente préférentiellement une résolution de 640x480 pixels. Chaque pixel comporte 256 niveaux de gris et est codé sur 8 bits.

Selon une autre caractéristique avantageuse de l'invention, le capteur d'images SENS est relié à la cellule d'affichage DISP via une liaison analogique ANALOG. Cette solution favorise la réduction de la consommation électrique lorsque la cellule d'affichage DISP est utilisée à la façon d'un viseur d'un appareil photographique classique. Cette solution permet en effet l'affichage direct sur la cellule d'affichage DISP de la vue que l'on s'apprête à photographier. En l'absence de cette liaison analogique ANALOG, chaque vue que l'on s'apprête à photographier devrait être préalablement numérisée, puis traitée par un processeur avant de pouvoir être affichée sur la cellule d'affichage DISP. On comprend qu'un tel procédé serait très défavorable du point de vue de la consommation électrique.

Lors de la prise d'une photographie, les signaux analogiques produits par le capteur d'images SENS sont convertis en données numériques par un convertisseur analogique/numérique CAN1. Ces données numériques sont ensuite temporairement stockées dans une mémoire MEM1 préférentiellement de type DRAM, d'une capacité de stockage de données par exemple de 320 kbytes.

Le module électronique 34 de traitement et de transmission sans fil des données selon l'invention comprend également un microprocesseur PROCESS qui contrôle le bon fonctionnement du procédé d'acquisition, de traitement et de transmission des données numériques correspondant aux images mémorisées dans la pièce d'horlogerie 1.

Selon une caractéristique particulièrement avantageuse de l'invention, le microprocesseur PROCESS est chargé du transfert des données temporairement mémorisées dans la mémoire MEM1 vers un circuit COMP de traitement des données, préférentiellement réalisé sur la même puce que ledit microprocesseur PROCESS, et présentant une architecture spécialisée assurant les calculs de compression numérique desdites données. Cette disposition essentielle de l'invention est très favorable du point de vue de la consommation électrique. La compression numérique des données constitue en effet une tâche répétitive qu'il est préférable de faire exécuter par un circuit auxiliaire spécialisé caractérisé par une faible consommation électrique, plutôt que par un microprocesseur qui devra, pour assurer cette même tâche, effectuer un grand nombre d'opérations élémentaires de calcul et qui consommera par conséquent un courant électrique important.

Après compression, les données numériques comprimées peuvent être stockées de façon prolongée dans une mémoire MEM2 préférentiellement de type SRAM, c'est-à-dire admettant un fonctionnement statique dans lequel l'information stockée n'a pas besoin d'être rafraîchie périodiquement. Bien que plus coûteuses, les mémoires SRAM sont préférées aux mémoires DRAM car leur consommation électrique est plus faible. La mémoire MEM2 aura par exemple une capacité de stockage de données de 320 kbytes.

Avant de commander le transfert des données correspondant aux images mémorisées dans la pièce d'horlogerie 1 vers l'unité de réception électronique distante 36, l'utilisateur peut souhaiter au préalable afficher les prises de vue qu'il a effectuées sur la cellule d'affichage DISP. Dans ce cas, les données comprimées mémorisées dans la mémoire MEM2 sont lues par le microprocesseur PROCESS, partiellement décomprimées et converties par un convertisseur numérique/analogique CAN2 en signaux analogiques qui viennent finalement commander l'affichage sur la cellule DISP. On notera que dans le cas d'une cellule d'affichage électro-optique classique, les informations présentées à l'écran doivent être périodiquement rafraîchies par rétablissement des charges électriques représentant ces informations, et ce même lorsque ces informations ne sont pas modifiées. Ceci est bien sûr très défavorable du point de vue de la consommation électrique. C'est pourquoi, selon une variante d'exécution préférée de l'invention, la cellule d'affichage DISP est une cellule réflective à affichage permanent dite bi-stable ou à mémoire, les informations présentées à l'écran n'étant rafraîchies que lors du passage d'une prise de vue à la prise de vue suivante.

Les données comprimées mémorisées dans la mémoire MEM2 sont transférées vers l'unité de réception électronique distante 36 via un émetteur TRANSMITT. Ce transfert peut s'effectuer via une liaison radio, préférentiellement à la fréquence de 27 MHz avec un débit de l'ordre de 100 Kbits/s, ou via une liaison infrarouge dans le domaine de l'infrarouge lent avec un débit de l'ordre de 114 kbits/s. Il va néanmoins de soi que la présente invention n'est pas limitée à ces plages de fréquence particulières, et que d'autres fréquences de transmission des données peuvent être envisagées.

Dans le cas de la liaison radio, la transmission des données se fera avantageusement à travers la glace 10 de la pièce d'horlogerie 1 lorsque celle-ci est métallique. Dans le cas de la liaison infrarouge, la transmission des données pourra se faire à travers ladite glace 10, ou encore à travers l'objectif 28 de l'appareil de prise d'images 30.

Selon une autre caractéristique avantageuse de l'invention, le module électronique 34 peut également comporter un récepteur RECEIV pour la réception de messages envoyés par l'unité électronique distante 36. Il peut notamment s'agir de messages de confirmation indiquant que le transfert des données depuis la pièce d'horlogerie 1 est achevé et qu'il s'est déroulé sans incident.

Les différents composants du module électronique 34 de traitement et de transmission sans fil des données selon l'invention sont classiquement reliés entre eux par des bus de données DATA BUS par lesquels transitent les informations à traiter et les instructions de programme, et par des bus d'adresses ADDRESS BUS par lesquels transitent les signaux d'adresses émis par le microprocesseur PROCESS à destination des registres d'adresses.

Il va de soi que diverses modifications et variantes simples entrent dans le cadre de la présente invention.

## Revendications

1. Objet portatif à faible consommation électrique comprenant un appareil (30) muni d'un objectif (28) et d'un capteur d'images (SENS) pour la prise d'images qui sont ensuite numérisées par un convertisseur analogique/numérique (CAN1), puis stockées dans une mémoire (MEN1), caractérisé en ce qu'il comporte en outre un module électronique (34) de traitement et de transmission sans fil des données numériques correspondant aux images mémorisées dans ledit objet portatif vers une unité de réception électronique distante (36).

2. Objet portatif selon la revendication 1, caractérisé en ce que le module électronique (34) de traitement et de transmission sans fil des données correspondant aux images mémorisées dans ledit objet portatif comprend un circuit (COMP) de traitement des données présentant une architecture spécialisée assurant les calculs de compression numérique de ces données.

3. Objet portatif selon l'une quelconque des revendications précédentes, caractérisé en ce que les données numérisées sont mémorisées dans des mémoires (MEM1, MEM2) de type DRAM et SRAM respectivement.

4. Objet portatif selon l'une quelconque des revendications précédentes, caractérisé en ce qu'il comprend une cellule d'affichage (DISP).

5. Objet portatif selon la revendication 4, caractérisé en ce que la cellule d'affichage (DISP) est une cellule réflective à mémoire.

6. Objet portatif selon l'une quelconque des revendications précédentes, caractérisé en ce que le capteur d'images (SENS) utilise la technologie CMOS.

7. Objet portatif selon l'une quelconque des revendications 4 à 6, caractérisé en ce que le capteur d'images (SENS) est relié à la cellule d'affichage (DISP) via une liaison analogique (ANALOG).

8. Objet portatif selon l'une quelconque des revendications précédentes, caractérisé en ce que les données mémorisées dans ledit objet portatif sont transférées vers l'unité de réception électronique distante (36) via une liaison radiofréquence.

9. Objet portatif selon la revendication 8, caractérisé en ce que le transfert via la liaison radiofréquence des données mémorisées dans ledit objet portatif s'effectue à une fréquence de 27 MHz.

10. Objet portatif selon l'une quelconque des revendications 1 à 7, caractérisé en ce que les données mémorisées dans ledit objet portatif sont transférées vers l'unité de réception électronique distante (36) via une liaison infrarouge.

11. Objet portatif selon la revendication 10, caractérisé en ce que le transfert via la liaison infrarouge des données mémorisées dans ledit objet portatif s'effectue dans le domaine de l'infrarouge lent.

12. Objet portatif selon l'une quelconque des revendications 10 ou 11, caractérisé en ce que la transmission des données se fait via l'objectif (28) de l'appareil de prise d'images numériques (30).

13. Objet portatif selon l'une quelconque des revendications précédentes, caractérisé en ce que le module électronique (34) comporte un récepteur (RECEIV) pour la réception de messages envoyés par l'unité électronique distante (36).
